# EUROPÄISCHE PATENTSCHRIFT

(11) **EP 1 850 993 B1**
(45) Veröffentlichungstag und Bekanntmachung des Hinweises auf die Patenterteilung: **15.12.2010**
(21) Anmeldenummer: 06707216.5
(22) Anmeldetag: 23.02.2006
(51) Int. Cl.: B23D 61/12, B23D 65/00, C23C 16/00, C23C 14/00

(54) **VERFAHREN ZUR HERSTELLUNG EINES SÄGEBANDES**
METHOD FOR THE PRODUCTION OF A SAW BAND
PROCEDE DE PRODUCTION D'UNE SCIE A RUBAN

(30) Priorität: 24.02.2005 DE 102005008810; 12.04.2005 DE 102005016953; 13.09.2005 DE 102005043527
(43) Veröffentlichungstag der Anmeldung: 07.11.2007
(73) Patentinhaber: Balint, Michael, 89561 Dischingen (DE)
(72) Erfinder: Balint, Michael, 89561 Dischingen (DE)
(74) Vertreter: Lorenz, Markus
(86) Internationale Anmeldenummer: PCT/EP2006/001669
(87) Internationale Veröffentlichungsnummer: WO 2006/089753

(56) Entgegenhaltungen:
- EP-A- 0 093 706
- EP-A1- 1 126 050
- EP-A1- 1 126 050
- WO-A-01/90436
- GB-A- 267 587
- GB-A- 1 513 667
- US-A- 4 337 300
- US-A1- 2004 026 236
- PATENT ABSTRACTS OF JAPAN Bd. 015, Nr. 164 (M-1106), 24. April 1991 (1991-04-24) -& JP 03 032516 A (AMADA CO LTD), 13. Februar 1991 (1991-02-13)
- PATENT ABSTRACTS OF JAPAN Bd. 013, Nr. 477 (M-885), 27. Oktober 1989 (1989-10-27) -& JP 01 188221 A (AMADA CO LTD), 27. Juli 1989 (1989-07-27)
- PATENT ABSTRACTS OF JAPAN Bd. 010, Nr. 203 (C-360), 16. Juli 1986 (1986-07-16) -& JP 61 044171 A (MANSEI KOGYO KK), 3. März 1986 (1986-03-03)

## Beschreibung

Die Erfindung betrifft ein Verfahren zur Herstellung eines Sägebandes gemäß dem Oberbegriff von Anspruch 1.

Aus der GB-A-1 513 667 ist ein gattungsgemäßes Verfahren bekannt. Hierbei wird auf das Sägeblatt ein hochschmelzendes Metall aufgebracht und anschließend impulsgehärtet.

US 4 337 300 offenbart ein Aufdampfverfahren bei einer Temperatur von 300°C bis 600°C zur Herstellung eines Schneidwerkzeugs aus einem Metallsubstrat aus Schnelldrehstahl mit einer Oberflächenbeschichtung in einer Dicke von 0,5 bis 10 µm, z.B. bei Bedampfen in Vakuum (PVD) oder durch chemisches Aufdampfen unter einem Plasmastrom (paCVD).

Die JP 03 032516 A beschreibt ein Verfahren zum Aufbringen einer Beschichtung auf ein Sägeband mittels eines Vakuumbeschichtungsprozesses.

Aus der JP 61 044 171 A ist es bekannt, ein aus Titan bestehendes Werkzeug mit einer Nitrid-, Oxid- oder Karbonidschicht zu versehen.

Die WO 01/90436 A1 beschreibt ein Beschichtungsverfahren, bei dem der zu beschichtende Gegenstand vor seiner Beschichtung mittels Kugelstrahlen gesäubert wird.

Ein Sägeband des Standes der Technik ist beispielsweise aus der DE 102 02 770 A1 bekannt. Es findet Verwendung in Bandsägemaschinen, wie sie beispielsweise in der DE 25 38 718 A1 beschrieben sind und insbesondere zum Sägen von großen Werkstücken eingesetzt werden, die mit Kreissägen nicht bearbeitet werden können. Trotz sehr großer Anstrengungen bezüglich verbesserter Werkstoffzusammensetzungen für diese Sägebänder sind sie jedoch nur für relativ geringe Schnittgeschwindigkeiten und geringe Vorschübe ausgelegt bzw. geeignet und haben sehr geringe Standzeiten, d.h. sie werden meist sehr schnell stumpf und müssen entsprechend häufig ausgetauscht werden.

Es ist ferner bekannt, Werkzeuge und Komponenten zur Erhöhung von Verschleissfestigkeit und Korrosionsschutz mit Überzügen zu versehen. Vielfach werden dazu PVD (physical vapour deposition) oder paCVD (plasma assisted chemical vapour deposition) Verfahren oder Kombinationen hiervon eingesetzt.

Die Publikation WO 2005/014877 A1 offenbart die Beschichtung eines Stahlbands in einem Rolle-zu-Rolle Prozess, wobei auf dem bevorzugt aus Kaltarbeitsstahl hergestelltem Band eine Schicht aus unterschiedlichen Hartstoffen einseitig oder in aufeinanderfolgenden Prozessschritten beidseitig aufgetragen wird. Anschließend kann aus diesem Band ein Sägeband hergestellt werden.

Nachteilig ist dabei, dass die Beschichtung von der Seite erfolgt. Damit wird auf den dem Verschleiß am stärksten ausgesetzten Funktionsflächen (Freifläche & Spanfläche) die geringste, auf den wenig belasteten Seitenflächen die größte Schichtdicke aufgebracht und somit das kostspielige Beschichtungsmaterial schlecht genutzt. Häufig wird zudem die Beschichtung auf Kaltarbeitssstählen aufgebracht, die erst anschließend gehärtet werden, was sich nachteilig auf den Schicht-/Substratverbund auswirken kann. Andererseits können solche Kaltarbeitsstähle nicht ohne weiteres nach dem Härten beschichtet werden, da übliche PVD-Prozesse die Anlasstemperatur solcher Werkstoffe bei weitem überschreiten. Tieftemperatur-PVD-Prozesse haben wiederum den Nachteil, schlechter haftende Schichten zu erzeugen, was gerade bei einer hohen Belastung wie beim Sägen und abrasivem Verschleiß ein wesentlicher Nachteil ist. Ein weiterer Nachteil entsteht durch den im Stand der Technik vorgeschlagenen Rolle-zu-Rolle Prozess. Hierbei kann nicht jede Sägegeometrie gewählt werden, z.B. ist eine verschränkte Zahngeometrie nicht möglich, da solche Bänder nicht oder nur schlecht gewickelt werden können. Da die im Stand der Technik bekannten Schichtdicken wesentlich größer als 5 µm sind, sind diese teuer in der Fertigung und bringen keine wesentliche Verbesserung gegenüber unbeschichteten Sägen, da hier tendenziell die Schicht an der Sägespitze beim Einlaufen abbricht und somit die Vorteile der Beschichtung dort nicht mehr zum Tragen kommen.

Es ist daher Aufgabe der vorliegenden Erfindung, ein Verfahren zur Herstellung eines derartigen Sägebandes zu schaffen, durch welches ein Sägeband geschaffen wird, das bei der Bearbeitung von insbesondere metallischen Werkstoffen eine größere Leistungsfähigkeit ermöglicht. Ferner sollen die Wirtschaftlichkeit bei der Herstellung wie auch beim Einsatz eines solchen Sägebandes verbessert werden.

Erfindungsgemäß wird diese Aufgabe durch die in Anspruch 1 genannten Merkmale gelöst.

Gemäß der vorliegenden Erfindung ist also vorgesehen, dass zumindest die Zahnreihe vor dem Aufbringen der Beschichtung zum Entfernen von Graten gebürstet wird. Ein solches Entfernen von Graten an der Zahnreihe verhindert, dass die Grate beim späteren Einsatz des Sägebandes abbrechen, wodurch eine unbeschichtete Oberfläche des Sägebandes hervorstehen würde.

Durch die erfindungsgemäße Beschichtung zumindest der Zahnreihe des Sägebandes mittels des erfindungsgemäßen Verfahrens ist eine sehr viel höhere Standzeit desselben möglich, was neben der längeren Einsatzzeit des Sägebandes auch größere Intervalle beim Wechsel verbrauchter Sägebänder erlaubt.

Ein weiterer Vorteil des mit dem erfindungsgemäßen Verfahren hergestellten Sägebandes sind die damit möglichen höheren Schnittgeschwindigkeiten sowie ein gegebenenfalls möglicher höherer Vorschub. Des Weiteren kann die Beschichtung aufgrund der verringerten Reibung zu einem sehr ruhigen und gleichmäßigen Lauf des Sägebandes führen, wodurch erheblich geringere Vorschubkräfte benötigt werden.

Ein sehr einfaches Handling des Sägebandes während des Beschichtens ergibt sich dadurch, dass das Sägeband in einer Coil-Form beschichtet wird, daher vor der Beschichtung zu einer Spirale gewickelt und in dieser Form in der Beschichtungsanlage gehaltert wird, wobei die Zahnreihen dann alle in dieselbe Richtung weisen. Diese Vorgehensweise führt außerdem zu einer erheblichen Kostenreduzierung für das Verfahren, da eine relativ große Sägebandlänge gleichzeitig beschichtet werden kann.

Ein erfindungsgemäßes Sägeband bzw. eine entsprechende Bandsäge besteht aus einem HSS (Hochgeschwindigkeitsstahl)-Grundwerkstoff, auf dem eine Hartschicht mittels PVD- oder PaCVD-Verfahren aufgebracht ist. HSS-Stähle eignen sich auf Grund ihrer größeren Temperaturbeständigkeit ausgezeichnet zur Beschichtung mit PVD- oder paCVD-Prozessen, da die Anlasstemperaturen dieser Stähle üblicherweise deutlich über 500°C liegen und somit eine Beschichtung im Bereich von 500°C problemlos möglich ist, was einen gegenüber Tieftemperaturprozessen deutlich besseren Schicht-/Grundwerkstoffverbund gewährt.

Schichten, die sich besonders gut für die Sägebeschichtung eignen sind TiAlN- sowie AlCrN-Schichten, wie sie beispielsweise auf industriellen Beschichtungssystemen des Typs BAI1200 oder RCS hergestellt werden können. Weitere Schichten, die auch zumindest in speziellen Schicht / Bearbeitungswerkstoffkombinationen eine deutliche Steigerung der Schnittleistung ergaben waren Kombinationen von TiAlN-, AlCrN-, CrN-, sowie die Carbonitiride und Carbide der entsprechenden Schichten, beispielsweise auch als Multilagen- oder Gradientenschichten mit steigendem Kohlenstoffgehalt, kombiniert mit metallischen, bzw. metallfreien DLC(diamond like carbon)-Deckschichten, sowie verschiedene Sihaltige Schichten bspw. TiAlSiN, AlCrSiN & die entsprechenden Carbonitride mit einem Si-Gehalt zwischen 1 bis 12 at% im Verhältnis zum Gesamtmetallgehalt.

Weitere besonders geeignete Schichtsysteme umfassen auch andere Hartstoffe, wie ein oder mehrere Metalle der IV-, V- oder VI-ten Nebenelementegruppe des Periodensystems (Übergangsmetalle) bzw. Aluminium oder Silizium und deren Verbindungen. Insbesondere kommen hierfür die Nitride, wie das bekannte TiN, VN oder TiSiN bzw. SiN, Carbide oder Carbonitride wie beispielsweise TiCN, VCN, Boride, Oxide wie bspw. Al₂O₃, (AlCr)₂O₃ sowie andere Mischungen der entsprechenden Nichtmetalle, wie beispielsweise Bornitride, Carbooxinitride u.a. mit den genannten Metallen in Frage. Auch Mehrlagenschichtsysteme, sowie speziell ausgebildete Haft- und Übergangsschichten können dabei für die Bearbeitung bestimmter Werkstoffe von Vorteil sein.

Als besonders vorteilhaft bezüglich der Standzeit sowie der Schnittgeschwindigkeiten und der Vorschübe hat sich eine Beschichtung aus einem Werkstoff auf Nitridbasis erwiesen. Hierbei kann die Beschichtung in vorteilhaften Ausgestaltungen TiN, TiCN, TiAlN und/oder AlCrN aufweisen. Hierbei können sämtliche Werkstoffe auch als Legierungen oder Gemische eingesetzt werden.

Eine weitere für die praktische Anwendung sehr gut geeignete Beschichtung kann WC/C als Deckschicht aufweisen, da dieses metallhaltige DLC-Schichtsystem ein besonders gutes Einlaufverhalten, beispielsweise eine Schichtglättung während der ersten Schnittzyklen, aufweist. Als Stützschicht kommen besonders die wie oben erwähnten Systeme in Frage.

Wenn in einer vorteilhaften Weiterbildung der Erfindung die Beschichtung eine Dicke von 2-3 µm aufweist, führt dies vorteilhafterweise zu einem sehr ruhigen, gleichmäßigen Lauf des Sägebandes und nicht zu einem Verklemmen oder ähnlichen Problemen, die sich bei einer Beschichtung mit einer größeren Dicke beim Sägen von Werkstücken ergeben könnten. Die Schichtdicke hängt jedoch auch von der Zahnteilung, der Zahngeometrie, dem zu bearbeitenden Material und dem Material der Beschichtung selbst ab, wodurch fallweise auch größere Schichtdicken möglich sind.

Zur Optimierung der Schnittleistung einer erfinderisch beschichteten Säge muss daher die richtige Schichtdicke eingestellt werden. Dabei hat sich in Versuchen überraschenderweise herausgestellt, dass dünnere Schichten, erfindungsgemäß etwa zwischen 0.5 bis 3 µm, insbesondere zwischen 0.7 und 2 µm, wesentlich bessere Schnittergebnisse liefern als dicke Schichten, ab einer Schichtstärke von ca. 4 µm und größer. Letztere konnten gegenüber unbeschichteten Bändern nur eine geringe oder gar keine Verbesserung des Schnittverhaltens erreichen.

In einer weiteren Ausgestaltung der Erfindung kann vorgesehen sein, dass die Zahnreihe aus HSSE besteht. Dieser Grundwerkstoff für die Zahnreihe führt zusammen mit der erfindungsgemäßen Beschichtung zu einem besonders verschleißfesten Sägeband.

Im Stand der Technik werden unbeschichtete Sägen üblicherweise mit einer Spanwinkelgeometrie von α=0° für einfache Sägeaufgaben wie dem Sägen von Werkstoffen mit hohem Kohlenstoffgehalt (z.B. Gusseisen) oder für Werkstücke mit kleinen Querschnitten bzw. dünnwandige Profile und Rohre eingesetzt. Hier können beschichtete Sägen mit einer Spanwinkelgeometrie von α=0° besonders vorteilhaft für das Sägen von harten Werkstoffen, wie Werkzeugstählen, z.B. X38CrMoV5-1, Werkstoffnummer 1.2343 mit einer Härte bis HB₃₀ = 235, eingesetzt werden. Dies ist von besonderem Vorteil, da diese Sägebandgeometrie einfacher und günstiger herstellbar ist wie Geometrien mit größerem Spanwinkel und eventueller zusätzlich kurvenförmig verlaufender Spanfläche. Somit ist es möglich trotz zusätzlicher Beschichtung die Bänder für Hartsägevorgänge bzw. für das Sägen großer massiver Geometrien, insbesondere Durchmesser zu günstigen Fertigungskosten herzustellen. Zusätzlich konnten auch Zahngeometrien mit negativem Spanwinkel getestet werden, so dass für das Hartsägen mit beschichteten Sägeblättern ein Spanwinkelbereich zwischen -5 bis +5°, bevorzugt aber zwischen -2 bis 3° in Frage kommt.

Bei stark aufschmierenden weichen Werkstoffen, wie VA-Edelstählen, z.B. X6Cr17, Werkstoffnummer 1.4016 mit einer Härte bis HB₃₀ = 185, konnten hingegen mit einer agressiveren Zahngeometrie mit einem Spanwinkel von α=10° die besten Ergebnisse erzielt werden. Ähnliche Ergebnisse lassen sich in einem Bereich α=10±3° erzielen.

Eine weitere Verbesserung konnte für unterschiedliche Anwendungen durch eine Anschrägung der Freifläche in einem Winkel zwischen β = 1 und 5°, bevorzugt bei β = 2 bis 3° erzielt werden.

Ein erfindungsgemäß beschichtetes Sägeband lässt sich in einem gut beherrschbaren Verfahren mit sehr guten Ergebnissen erzielen, wenn das die Beschichtung bildende Material erfindungsgemäß mittels PVD oder paCVD Verfahren aufgebracht wird bei einer Temperatur von 450 - 550°C, vorzugsweise ca. 500 bis 550°C.

Wenn in einer vorteilhaften Ausgestaltung des Verfahrens nur die Zahnreihe bis zu dem Übergang zu dem Bandrücken mit der Beschichtung versehen wird, so führt dies durch die Einsparung von Beschichtungsmaterial zu einer Kostensenkung bei der Herstellung des erfindungsgemäßen Sägebandes. Hierbei ergibt sich keine Verringerung der Qualität des erfindungsgemäßen Sägebandes, da der nicht beschichtete Bandrücken keine schneidende Funktion hat. Dazu können beispielsweise abgelängte Sägebänder zu Stapeln zusammengefasst und beispielsweise in bekannten Cassettenhalterungen gemeinsam beschichtet werden. Insbesondere wenn die Zahnreihe aus einem anderen Material als der Bandrücken besteht, kann es vorteilhaft sein, wenn die Zahnreihe mit dem Bandrücken verschweißt wird.

Des Weiteren kann vorgesehen sein, dass das Sägeband nach dem Beschichten zu einem Ring verschweißt wird. Auf diese Weise ist ein sofortiger Einsatz des Sägebandes an einer Bandsägemaschine möglich.

In einer vorteilhaften Weiterbildung der Erfindung werden die spiralförmig gewickelten Sägebänder zu mehreren auf Halterungen montiert und gemeinsam in einer Charge beschichtet.

### Die Figuren zeigen:

- Fig. 1: einen Zahn;
- Fig. 2: einen Ausschnitt eines Sägebandes;
- Fig. 3: zeigt einen unbeschichteten und einen beschichte- ten Zahn im Querschnitt; und
- Fig. 4: eine Beschichtungsanlage
- Fig. 5 bis Fig. 9: Diagramme von Sägeversuchen mit dem erfindungsgemäßen Sägeband.

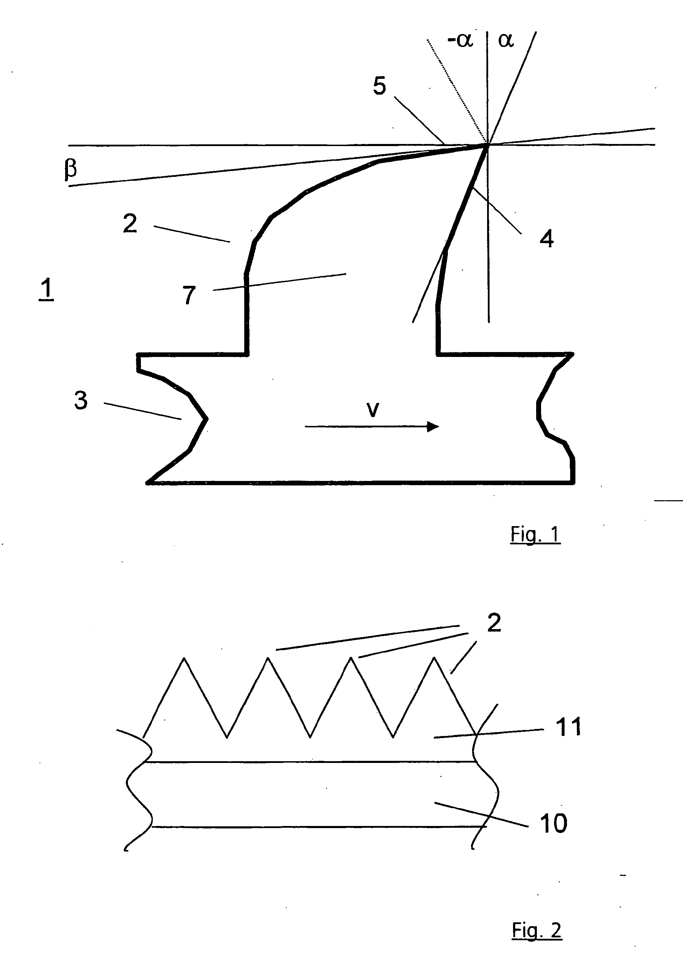

Fig. 1 zeigt in einem schematischen Ausschnitt einen Zahn 2 eines Sägebands 1 mit einem Sägerücken 3, wobei der Zahn einer Spanfläche 4 mit Spanwinkel α, eine Freifläche 5 mit Freiwinkel β sowie eine Seitenfläche 7 aufweist.

Das Sägeband kann in der Form eines geschlossenen Rings ausgebildet und in an sich bekannter Weise auf einer Bandsägemaschine angebracht werden. Die Richtung der Schnittgeschwindigkeit des Sägebandes 1 ist durch den mit "v" bezeichneten Pfeil in Fig. 1 angedeutet. Solche Sägebänder werden in Bandsägemaschinen sowohl in horizontaler wie auch vertikaler Orientierung eingesetzt. Je nach Einsatzart wird dann das Werkstück auf das Sägeband 1 zubewegt oder umgekehrt.

In Fig. 2 ist ein Ausschnitt des Sägebandes 1 dargestellt. Dabei ist zu erkennen, dass das Sägeband 1 einen Bandrücken 10, an dem das Sägeband 1 in nicht dargestellter, jedoch an sich bekannter Weise innerhalb der Bandsägemaschine geführt ist, sowie eine mehrere Zähne 2 aufweisende Zahnreihe 11 aufweist. Der Bandrücken 10 besteht vorzugsweise aus einem relativ einfachen, "weichen" Stahl, wohingegen die Zahnreihe 11 aus einem Hochleistungs-Schnellarbeitsstahl, vorzugsweise aus HSSE, besteht. Durch die Verwendung eines einfacheren Stahls für den Bandrücken 10 können Kosten eingespart und die Flexibilität des Sägebandes 1 erhöht werden. Zur Verbindung der Zahnreihe 11 mit dem Bandrücken 10 ist ein Schweißverfahren zu bevorzugen.

Um insbesondere die Standzeit, vorzugsweise jedoch auch die Schnittgeschwindigkeit und gegebenenfalls den Vorschub des Sägebandes 1 zu erhöhen, ist zumindest die Zahnreihe 11 mit einer die Verschleißfestigkeit erhöhenden Beschichtung versehen. Die in den Zeichnungen nicht erkennbare Beschichtung kann beispielsweise einen wie oben erwähnten Werkstoff umfassen bzw. aus einem solchen Werkstoff bestehen. Die Beschichtung trägt des Weiteren zu einer Verringerung der Schnittkraft des Sägebandes 1 bei.

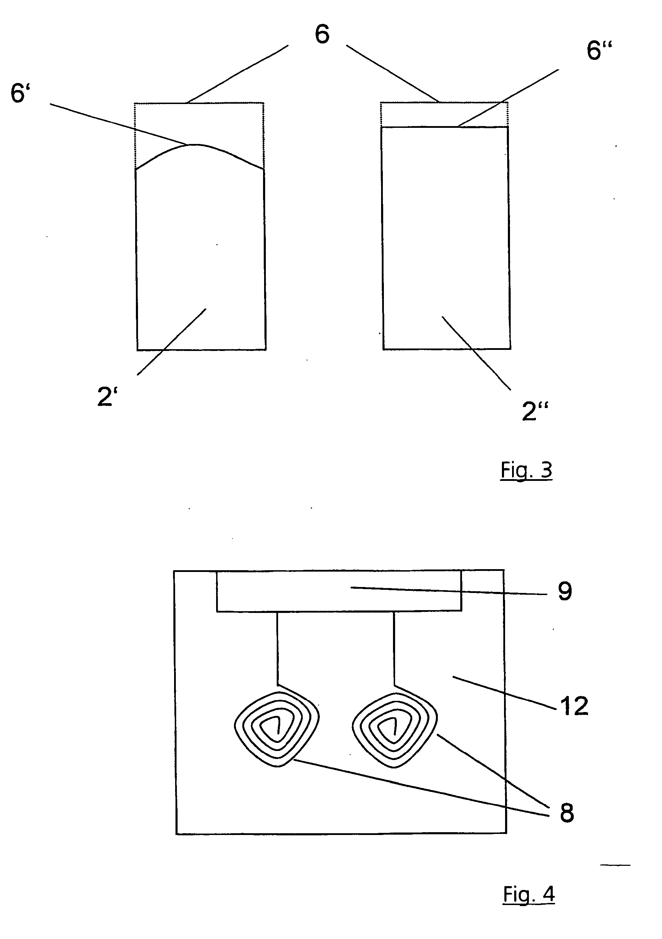

Figur 3 zeigt schematisch einen unbeschichteten bzw. mit einer herkömmlichen Schicht beschichteten Zahn 2' sowie einen mit einer erfindungsgemäßen Schicht beschichteten Zahn 2" nach längerem Gebrauch im Querschnitt. Die Spitze bzw. Geometrie des ungebrauchten Zahns wird jeweils durch eine gestrichelte Linie 6 dargestellt. Der unbeschichtete Zahn zeigt nach gleicher Schnittzahl einen stärkeren Abtrag der Spitze 6' sowie eine Verrundung der Spitze 6' im Querschnitt. Der beschichtete Zahn 2" hingegen zeigt auch nach vollständigem Schichtabtrag einen geringeren Abtrag deren Spitze 6" sowie keine oder eine geringere Verrundung. Dies hat wesentliche Vorteile, da damit die im wesentlichen durch die Kanten der Spitze 6 sichergestellte Führung im Werkstoff erhalten bleibt und auch bei starker Abnutzung des Sägebandes ein gerader Schnitt möglich ist, wohingegen ein Band mit stark verrundeten Zähnen 2' starke Verlauftendenzen zeigt, was Ausschuss und/oder Materialverbrauch erhöht.

Fig. 4 zeigt in sehr schematischer Darstellung eine Beschichtungsanlage 12, mit der ein Verfahren zur Herstellung des oben beschriebenen Sägebandes 1 für die Bandsägemaschine durchgeführt werden kann. Innerhalb dieser Beschichtungsanlage 12 wird zumindest auf die Zahnreihe 11 die oben beschriebene, die Verschleißfestigkeit des Sägebandes 1 erhöhende Beschichtung aufgebracht. Die bevorzugt als Vakuumbeschichtungsanlage ausgeführte Anlage 12 umfasst, obwohl nicht dargestellt, die zur Beschichtung notwendigen Installationen, wie Sputtertargets, Verdampfertiegel oder Arcquellen (auch kombiniert) nebst deren elektrischen Betriebsvorrichtungen; sowie Gaszuführungs- und Regelungseinrichtungen, um beispielsweise oxidische oder nitridische Schichten abscheiden zu können; Vakuumpumpen, um die zum Betrieb eines PVD oder paCVD Verfahrens notwendigen Druckverhältnisse zu schaffen, sowie Heizvorrichtungen, Messapparaturen und weitere Hilfsantriebe. Anlagen dieser Art gehören als Beschichtungsanlagen von Werkzeugen und Komponenten zum Stand der Technik.

Im vorliegenden Fall wird zum Beschichten des Sägebandes 1 in einer auf einem Coil 8 aufgewickelten Form in die Beschichtungsanlage 7 eingebracht und an einer dort vorgesehenen Halterung 9 aufgehängt. Hierbei kann der Coil 8 einen Durchmesser von bis zu 50 cm aufweisen, was zu einer Gesamtlänge des Sägebandes 1 von 100 m führt. Vorzugsweise wird nur die Zahnreihe 6 bis zu dem Übergang derselben zu dem Bandrücken 10, also im wesentlichen bis zu dem jeweiligen Zahngrund, mit der Beschichtung versehen, um Beschichtungsmaterial einzusparen. Nach dem Beschichten wird das Sägeband 1 aus der Anlage 12 entnommen und kann in nicht dargestellter Weise zu einem Ring verschweißt werden.

Um zu vermeiden, dass eventuell an den Zähnen 2 sich befindliche Grate beim späteren Einsatz des Sägebandes 1 abbrechen, wodurch ein unbeschichteter Bereich des Sägebandes 1 an dessen Oberfläche gelangen und damit dessen Verschleißfestigkeit erheblich verringert werden würde, wird erfindungsgemäß zumindest die Zahnreihe 11 vor dem Aufbringen der Beschichtung zum Entfernen von Graten gebürstet. Statt des Grates weist der jeweilige Zahn 5 nach der Bearbeitung einen kleinen Radius auf. Im Falle des Bürstens wird eine umlaufende Bürste verwendet, die erfindungsgemäß das auf dem Coil 8 aufgewickelte Sägeband 1 bürstet.

### Beispiele:

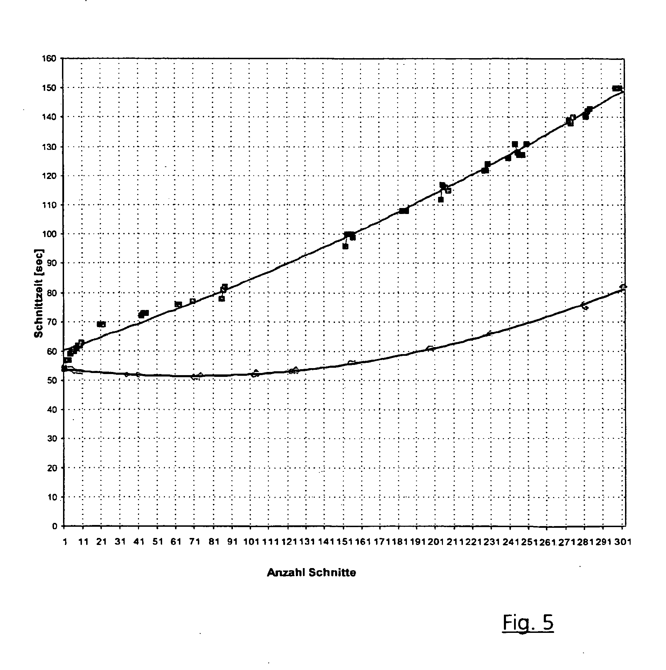

Figur 5 zeigt sehr deutlich die Vorteile eines erfinderischen Sägebandes. Ein Rohr 91,45 x 14.3 mm aus 100Cr6, Werkstoff-Nr. 1.3505, wurde mit einem Sägeband mit ca. 1 bis 2 µm TiAlN-Beschichtung (Balinit FuturaNano, Prozess FN1) und Spanwinkel 0° mit einer Schnittgeschwindigkeit von 120 m/min bearbeitet. Für ein unbeschichtete Band wurden die vom Hersteller empfohlenen Schnittgeschwindigkeit, nämlich 60 m/min, verwendet. Die Kurven zeigen die Schnittzeit in Abhängigkeit der Anzahl Schnitte. Die obere Kurve zeigt die Werte für das unbeschichtete, die untere für das beschichtete Band. Die Gesamtschnittzeit für 300 Teile mit dem beschichteten Sägeband betrug 5 Stunden. Die Gesamtschnittzeit für 300 Teile mit dem unbeschichteten Sägeband betrug 8 Stunden und 24 Minuten. Nach 300 Schnitten lag die Schnittzeit des beschichteten Bandes pro Schnitt bereits unter der halben Schnittzeit des unbeschichteten Bandes.

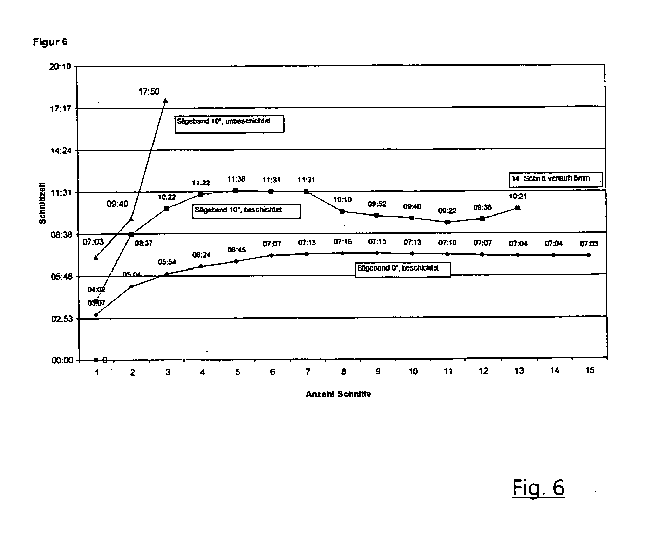

Figur 6 zeigt zwei Sägeversuche mit ca. 1 bis 2 µm TiAlN (Balinit FuturaNano, w.o.) beschichteten Sägebändern unterschiedlicher Geometrie auf Werkzeugstahl 80 x 80 mm, X38CrMoV5-1, Werkstoff-Nr. 1.2343. Die Schnittgeschwindigkeit betrug 90 m/min, Schnittdruck 16 bar und Vorschub 4. Die Unterschiede zwischen den beiden Bändern lagen ausschließlich in der Zahngeometrie, genauer gesagt dem Spanwinkel. Dabei stellte sich völlig überraschend heraus, dass das Sägeband mit dem kleineren Spanwinkel von 0° (Kurve mit Rautenmarkierung, unten) dem Sägeband mit dem schärferen Spanwinkel von 10° (Kurve mit Viereckmarkierung, mitte) deutlich überlegen ist, was sich umgekehrt zu den Erfahrungen mit beschichteten Sägeblättern verhält.

Bei einem hier nur für "10°-Bänder" gezeigten Vergleichstest mit unbeschichteten Bändern bei halber Schnittgeschwindigkeit, also 45m/min (nach Herstellerempfehlung), und sonst wie oben angeführten gleichen Bedingungen, war das Sägeband mit Spanwinkel 0° bereits nach einem Drittel des ersten Schnittes, das Sägeband mit Spanwinkel 10° bereits nach der Hälfte des ersten Schnittes stumpf. Der Versuch wurde daher lediglich mit dem "10°-Band" weitergeführt (Kurve mit Dreieckmarkierung, oben). Allerdings lag dabei die Schnittzeit bereits beim dritten Schnitt bei ca. 18 Minuten während das geometrisch identische beschichtete Band eine Schnittzeit von ca. 10 Minuten, das beschichtete "0°-Band" jedoch nur eine Schnittzeit von ca. 6 Minuten benötigt.

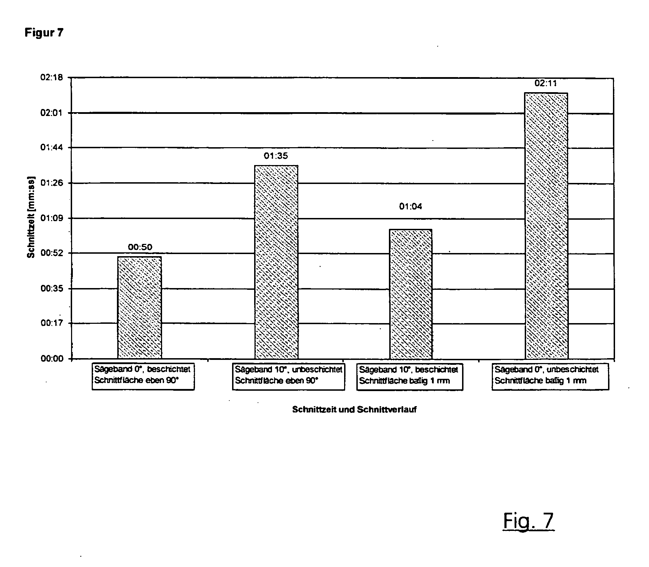

Figur 7 zeigt einen Vergleich der Schnittzeiten beschichteter und unbeschichteter Sägebänder unterschiedlicher Zahngeometrien. Dabei wurde ein Vergütungsstahl C 45, Werkstoff-Nr. 1.0503, d= 100 mm massiv gesägt. Die Sägeparameter für die beschichteten Bänder wurden jeweils wie folgt eingestellt. Das erste Ergebnis zeigt Säule 1 von Figur 7.
Schnittgeschw. 120 m/min
Schnittdruck 18 bar
Vorschub 4.

Werden unbeschichtete Bänder mit den gleichen Parametern betrieben kommt es zu einem sogenannten Verlaufen des Schnitts, d.h. der Schnitt verläuft schräg, was zu Ausschuss führt. Daher mussten unbeschichtete Bänder mit entsprechend niedrigerer Schnittgeschwindigkeit und Druck gefahren werden, das Ergebnis ist Säule 4 von Figur 7:
Schnittgeschw. 75 m/min
Schnittdruck 12 bar
Vorschub 3.

Sowohl für Bänder mit Spanwinkel 0° als auch für Bänder mit Spanwinkel 10° konnte somit die Schnittzeit durch die Beschichtung und dem erst dadurch möglichen Betrieb bei höherer Schnittgeschwindigkeit und Druck um ca. 50% verringert werden. Allerdings konnte bei den gewählten Schnittparametern lediglich für "0°-Sägebänder" ein ebener Schnitt erzielt werden. Bei beschichteten und unbeschichteten "10°-Bändern" hingegen wurde eine Balligkeit der Schnittfläche mit maximaler Abweichung von 1 mm von der Schnittebene festgestellt, was entweder zu Ausschuss oder Nachbearbeiten der Werkstücke führen würde.

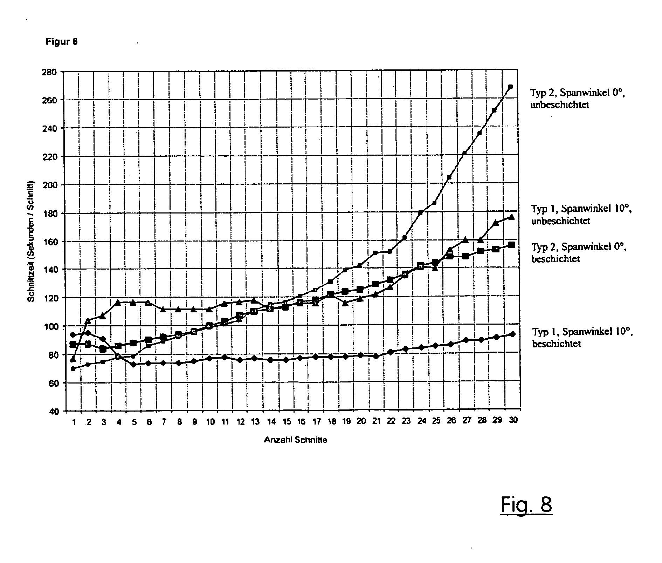

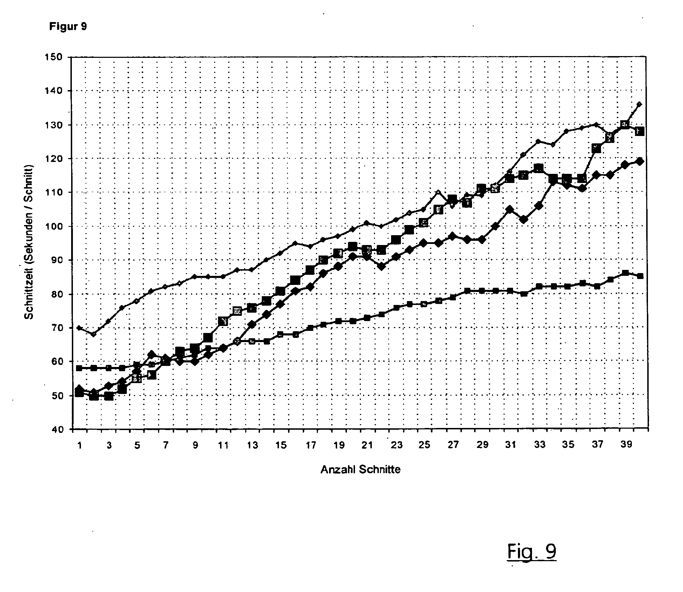

Die Figuren 8 und 9 zeigen die Ergebnisse von Sägeversuchen mit Sägeblättern unterschiedlicher Geometrie (Typ 1-3) mit Spanwinkeln 0°/10° in beschichteter und unbeschichteter Version. Das Werkstück in Figur 8 war ferritischer Edelstahl, X6Cr17, Werkstoff 1.4016. Die Schnittbreite betrug d=102 mm, die Schnittgeschwindigkeit 120 m/min und der Vorschubdruck 6.0. In Figur 9 wurde Vergütungsstahl, 42CrMo4, Werkstoff-Nr. 1.7225 mit Schnittbreite d=90 mm, Schnittgeschwindigkeit 90 m/min und ein Vorschubdruck von 4,4 bearbeitet. In allen Fällen zeigt sich die Überlegenheit von beschichteten gegenüber unbeschichteten Sägebändern.

Im relativ weichen ferritischen Edelstahl ergibt sich das beste Schnittergebnis mit einem beschichteten Sägeblatt mit Spanwinkel 10°. Im relativ harten Vergütungsstahl wird jedoch mit einem beschichteten Band mit einem Spanwinkel von 0° das beste Ergebnis erzielt, was umso erstaunlicher ist, da ein unbeschichtetes Band mit diesem Spanwinkel die schlechtesten Ergebnisse erbringt.

Ein weiterer Sägeversuch wurde auf Vergütungsstahl / Kaltfließpressstahl 42 CrMo 4V, Werkstoff-Nr. 1.7225, d=300 mm massiv mit einer Schnittgeschwindigkeit von 50 m/min, Schnittdruck 16 bar und Vorschub 3 durchgeführt und dabei Standzeit und Standfläche eines unbeschichteten Sägebands mit Spanwinkel 16° sowie eines beschichteten Sägebandes mit Spanwinkel 0° ermittelt. Dabei war das unbeschichtete Band nach 6 Stunden, einer Standmenge von 21 Schnitten und einer Standfläche von 1.48 m² verschlissen. Mit dem beschichteten Band konnten innerhalb der Gebrauchsdauer von 8 Stunden und 53 Minuten, 31 Schnitte und eine Standfläche von 2.19 m² erzielt werden, was einer Steigerung der Schnittmenge und Standfläche von knapp 50 % entspricht.

Darüber hinaus zeigten Langzeitsägeversuche, bei denen mit Rohrmaterial Durchmesser 91 mm, Wandstärke 16 mm aus 16MnCr5, Werkstoff-Nr. 1.7131 (HB 140 bis 207) gesägt wurde, dass bei einem unbeschichteten Sägeband mit einem Spanwinkel 10° nach 500 bis 600 Schnitten der Schnitt über den Durchmesser 1 mm aus dem Winkel lief. Hingegen konnten mit einem gleichartigen, aber beschichteten Sägeband 900 bis 1200 Schnitte erzielt werden ohne dass ein aus dem Winkel Laufen des Bandes beobachtet werden konnte. Dies ist umso überraschender, da beschichtete Sägebänder am Ende der Lebenszeit auch stumpf noch den Winkel halten. Damit ist beispielsweise ein automatisierter Sägevorgang über Nacht ohne weiteres möglich.

## Patentansprüche

1. Verfahren zur Herstellung eines Sägebandes (1), wobei zumindest auf die Zahnreihe (11) des Sägebandes (1) eine Hartstoffbeschichtung mittels eines Vakuumbeschichtungsprozesses aufgebracht wird, wobei das Sägeband spiralförmig zu einem Coil (8) aufgewickelt und in dieser Form beschichtet wird, **dadurch gekennzeichnet, dass** zumindest die Zahnreihe (11) des auf dem Coil (8) aufgewickelten Sägebandes (1) vor dem Aufbringen der Hartstoffbeschichtung zum Entfernen von Graten gebürstet wird, dass die Beschichtung in einer Dicke von 0,5 bis 3 µm aufgebracht wird, und dass das die Beschichtung bildende Material mittels eines PVD- oder paCVD-Verfahrens oder einer Kombination davon bei einer Temperatur von 450 bis 550° C aufgebracht wird.

2. Verfahren nach Anspruch 1, **dadurch gekennzeichnet, dass** das Sägeband nach dem Beschichten zu einem Ring verschweißt wird.

3. Verfahren nach einem der Ansprüche 1 oder 2, **dadurch gekennzeichnet, dass** die Hartstoffbeschichtung im Wesentlichen lediglich auf die Freiflächen (5) und die Spanflächen (4) der Zahnreihe (11) aufgebracht wird.

4. Verfahren nach einem der Ansprüche 1 bis 3, **dadurch gekennzeichnet, dass** die Beschichtung ein oder mehrere Metalle oder IV-, V- oder VI-ten Nebenelementgruppe des Periodensystems oder Aluminium oder Silizium enthält.

5. Verfahren nach Anspruch 4, **dadurch gekennzeichnet, dass** die Beschichtung die Nitride, Oxide, Carbide, Carbonitride, Boride der vorgenannten Metalle oder Mischungen davon enthält.

6. Verfahren nach Anspruch 5, **dadurch gekennzeichnet, dass** die Beschichtung TiAlN, AlCrN, metallisches oder metallfreies DLC, TiAlSiN, TiAlCN, WC/C enthält.

## Claims

1. A method for the production of a saw band (1), a hard material coating being applied by means of a vacuum coating process to the row of teeth (11) of the saw band (1), the saw band (1) being wound up spirally to form a coil and coated in this form, **characterized in that** at least the the row of teeth (11) of the saw band (1) being wound up on the coil (8) is brushed before applying the hard material coating to remove burr, that the coating is applied in a thickness of 0.5 to 3 µm, and that the material forming the coating is applied by means of a PVD or paCVD method or a combination thereof at a temperature of 450 to 550°C.

2. The method as claimed in claim 1, **characterized in that** the saw band is welded to a ring after coating.

3. The method as claimed in claim 1 or 2, **characterized in that** the hard material coating is substantially applied only to the tool flanks (5) and tool faces (4) of the row of teeth (11).

4. The method as claimed in one of claims 1 to 3, **characterized in that** the coating contains one or more metals of subgroups IV, V or VI of the periodic system or aluminium or silicon.

5. The method as claimed in claim 4, **characterized in that** the coating contains nitrides, oxides, carbides, carbonitrides or borides of the aforementnioned metals or mixtures thereof.

6. The method as claimed in claim 5, **characterized in that** the coating contains TiAlN, AlCrN, metallic or metalfree DLC, TiAlSiN, TiAlCN or WC/C.

## Revendications

1. Procédé de fabrication d'un ruban de scie (1) dans lequel un revêtement de matière dure est déposé au moins sur la rangée de dents (11) du ruban de scie (1) au moyen d'un procédé de revêtement sous vide, dans lequel le ruban de scie est enroulé en spirale pour former une bobine (8) et est revêtu dans cette forme, **caractérisé en ce que**, avant le dépôt du revêtement de matière dure, au moins la rangée de dents (11) du ruban de scie (1) enroulé sur la bobine (8) est brossée pour éliminer les bavures, **en ce que** le revêtement est déposé avec une épaisseur de 0,5 à 3 µm, et **en ce que** la matière formant le revêtement est déposée au moyen d'un procédé PVD ou paCVD ou d'une combinaison de ces procédés à une température de 450 à 550° C.

2. Procédé selon la revendication 1, **caractérisé en ce que**, après le revêtement, le ruban de scie est soudé en un anneau.

3. Procédé selon l'une des revendications 1 ou 2, **caractérisé en ce que** le revêtement de matière dure est appliqué sensiblement exclusivement sur les faces en dépouille (5) et les faces d'attaque (4) de la rangée de dents (11).

4. Procédé selon l'une des revendications 1 à 3, **caractérisé en ce que** le revêtement contient un ou plusieurs métaux du groupe IV, V ou VI d'éléments secondaires de la classification périodique, ou encore de l'aluminium ou du silicium.

5. Procédé selon la revendication 4, **caractérisé en ce que** le revêtement contient des nitrures, oxydes, carbures, carbonitrures, borures des métaux précités ou des mélanges de ces substances.

6. Procédé selon la revendication 5, **caractérisé en ce que** le revêtement contient du TiAlN, du AlCrN, du DLC métalliques ou du TiAlSiN, du TiAlCN, du WC/C non métalliques.
